# EUROPEAN PATENT SPECIFICATION

(11) **EP 4 092 269 B1**
(45) Date of publication and mention of the grant of the patent: **24.07.2024**
(21) Application number: 22172440.4
(22) Date of filing: 10.05.2022
(51) Int. Cl.: F04B 35/01, F04B 39/12, F04B 39/14

(54) **AIR COMPRESSOR**
LUFTKOMPRESSOR
COMPRESSEUR À AIR

(30) Priority: 19.05.2021 TW 110118147
(43) Date of publication of application: 23.11.2022
(73) Proprietor: Chou, Wen-San, Tainan City (TW); Chou, Cheng-Hsien, Tainan City (TW)
(72) Inventor: Chou, Wen-San, Tainan City (TW); Chou, Cheng-Hsien, Tainan City (TW)
(74) Representative: Becker Kurig & Partner Patentanwälte mbB

(56) References cited:
- EP-A1- 3 670 911
- CN-U- 206 283 384
- KR-A- 20180 061 540
- US-A1- 2015 337 825
- US-A1- 2018 223 824
- US-A1- 2020 208 620

## Description

### FIELD OF THE INVENTION

The present invention relates to an air compressor which is capable of fixing the motor on a body of the air compressor and the air compressor is received in an accommodation box without using any screws.

### BACKGROUND OF THE INVENTION

A conventional air compressor contains a body, a cylinder connected on the body, a motor fixed on the body, and a piston driven by the motor to move in the cylinder reciprocately, such that the motor actuates the piston to move in the cylinder reciprocately, thus sucking, compressing, and discharging airs. Furthermore, the air compressor is received in an accommodation box.

The motor is fixed on the body by screws, but it is easy to remove from the body after a period of using time. When the screws are inserted through the body to screw with multiple threaded orifices of a casing of the motor, a tool is difficult to screw the screws with the multiple threaded orifices in a limited space. Therefore, the motor cannot be fixed on the body by using the screws easily.

Document US 2020/0208620 A1 relates to a motor of an air compressor having a connection structure which is capable of fixing the motor on a base without using screws.

Document EP 3 670 911 A1 relates in a very similar way to a positioning structure that can fix a motor of an air compressor on a base without using a screw.

Further, US 2015/337825 A1 relates to a portable electric inflator including an electric air compressor. Since various parts of the air compressor are accommodated in a small box, there was a need to construct a system of deflector vanes attached to the box guiding the airflow from the fan around the heat-generating parts of the air compressor to improve a more effective dissipation of the heat.

The present invention has arisen to mitigate and/or obviate the aforedescribed disadvantages.

### SUMMARY OF THE INVENTION

According to the invention, an air compressor as claimed in claim 1 is provided, the air compressor is received in an accommodation box, the motor further includes at least one fixing portion extending from a head edge thereof and configured to engage with the body, thus fixing the motor on the body securely without using any screws.

Another aspect of the present invention is to provide an air compressor in which the accommodation box includes multiple columns extending from inner walls of an upper housing and a lower housing of the accommodation box and corresponding to the two dissipation holes, such that when the air compressor is received in the accommodation box, the multiple columns of the accommodation box are engaged in the two dissipation holes so that the motor does not remove from the body when the air compressor is hit to turn over.

### BRIEF DESCRIPTION OF THE DRAWINGS

FIG. 1 is a perspective view showing the exploded components of an air compressor according to a preferred embodiment of the present invention.
FIG. 2 is a perspective view showing the assembly of the air compressor according to the preferred embodiment of the present invention.
FIG. 3 is a side plan view showing the operation of a part of the air compressor according to the preferred embodiment of the present invention.
FIG. 4 is a cross-sectional perspective view showing the assembly of a part of the air compressor according to the preferred embodiment of the present invention.
FIG. 5 is a perspective view showing the air compressor being received in an accommodation box according to the preferred embodiment of the present invention.
FIG. 6 is a cross sectional view of the air compressor of FIG. 5.

### DETAILED DESCRIPTION OF THE PREFERRED EMBODIMENTS

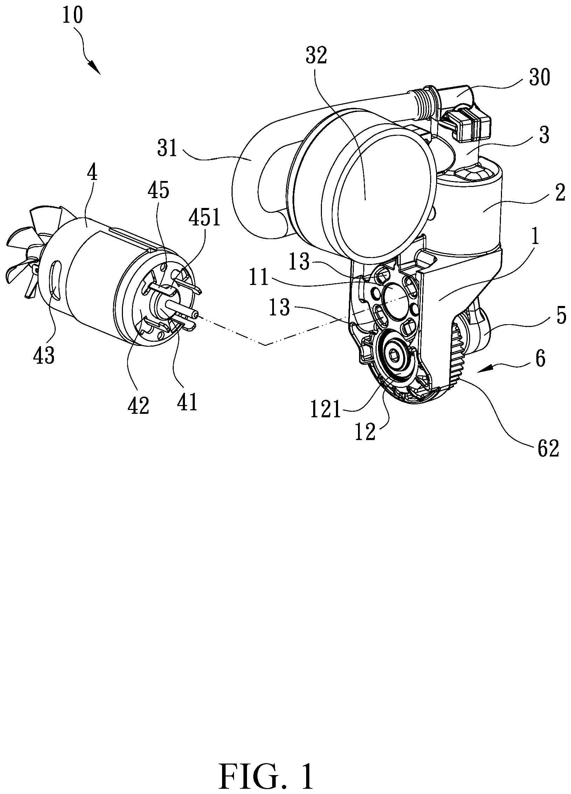

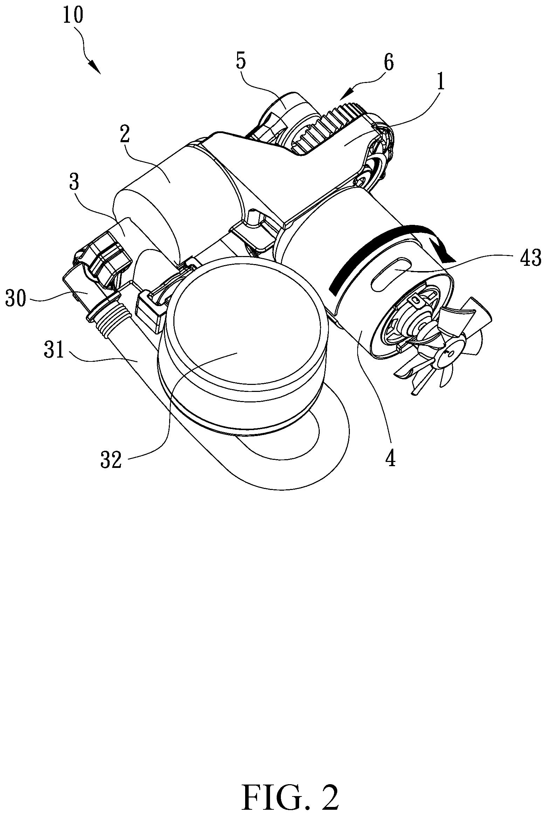

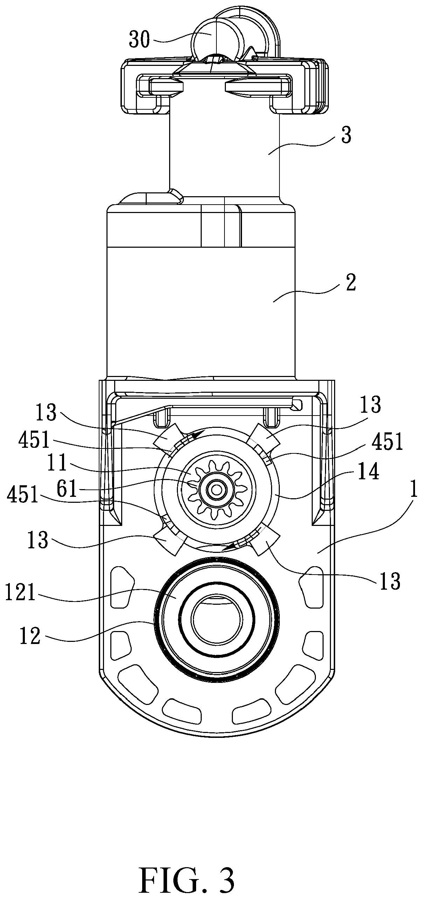

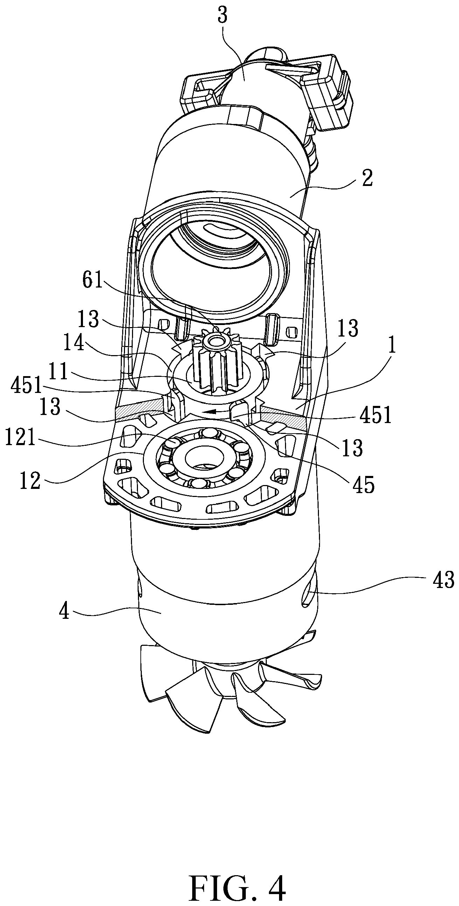

With reference to FIGS. 1-4, an air compressor 10 according to a preferred embodiment of the present invention comprises: a body 1, a cylinder 2 connected on the body 1, a motor 4 fixed on the body 1, and a piston 5 driven by the motor 4 to move in the cylinder 2 reciprocately.

The body 1 includes multiple positioning orifices which are a first positioning orifice 11 and a second positioning orifice 12, wherein a small gear 61 is received in the first positioning orifice 11 and is connected on an end of the motor 4, and a connection seat 41 of the motor 4 is accommodated in the first orifice 11. The second positioning orifice 12 is configured to receive a bearing 121. The motor 4 further includes two dissipation holes 43 symmetrically formed on two sides of the casing thereof and configured to circulate airs and to dissipate heat from the motor 4.

The cylinder 2 is one-piece connected on the body 1 and is in communication with an air storage holder 3, wherein the air storage holder 3 includes at least one tube 30 in which an air hose 31 and a pressure gauge 32 are received.

A transmission mechanism 6 includes a large gear 62 having a counterweight block and configured to mesh with the small gear 61, wherein the large gear 62 is connected with a bearing 121 by using shaft (not shown), and the transmission mechanism 6 actuates the piston 5 to move in the cylinder 2 reciprocately so as to produce compressed airs.

Referring to FIGS. 1-6, the motor 4 further includes multiple fixing portions 45 extending from a head edge 42 of the casing thereof, and a respective one fixing portion 45 has a hook 451 extending from a distal end thereof. The body 1 further includes multiple through orifices 13 corresponding to the multiple fixing portions 45, and a receiving groove 14 surrounding adjacent to the first positioning orifice 11. The multiple fixing portions 45 extends through the multiple through orifices 13 of the body 1 so that when the motor 4 rotates, the hooks 451 of the distal ends of the multiple fixing portions 45 abut against the receiving groove 14, thus fixing the motor 4 on the body 1 securely without using any screws.

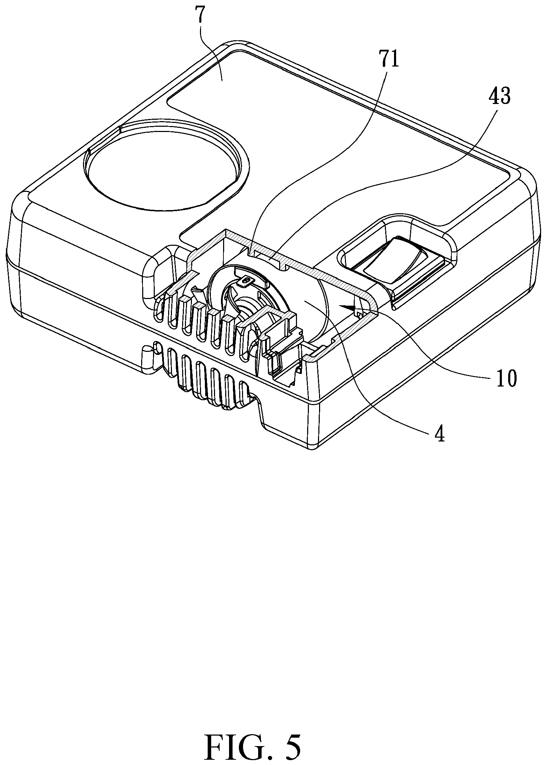

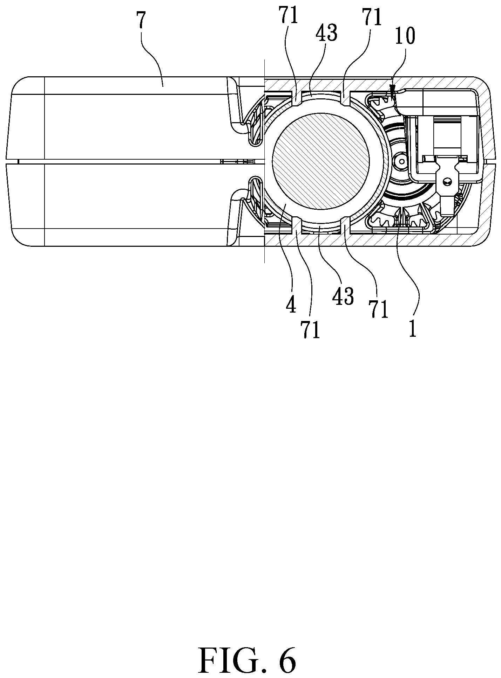

Referring to FIGS. 5 and 6, the air compressor 10 is received in an accommodation box 7. The accommodation box 7 includes multiple columns 71 extending from inner walls of an upper housing and a lower housing of the accommodation box 7 and corresponding to the two dissipation holes 43, such that when the air compressor 10 is received in the accommodation box 7, the multiple columns 71 of the accommodation box 7 are engaged in the two dissipation holes 43 so that the motor 4 does not remove from the body 1 when the air compressor 10 is hit to turn over.

Thereby, the multiple fixing portions 45 of the head edge 42 of the motor 4 are engaged with the body 1 of the air compressor 10 so that the motor 4 is fixed on the body 1 securely without using any screws, and the air compressor 10 is received in the accommodation box 7, wherein the two dissipation holes 43 of the motor 4 are limited by the multiple columns 71 of the accommodation box 7 so that the motor 4 does not remove from the body 1.

## Claims

1. An air compressor (10) comprising:
a body (1) including multiple positioning orifices which are a first positioning orifice (11) and a second positioning orifice (12);
a cylinder (2) connected on the body (1) and communicating with an air storage holder (3);
a motor (4) fixed on the body (1) and a small gear (61) being received in the first positioning orifice (11), and a connection seat (41) of the motor (4) being accommodated in the first positioning orifice (11);
a transmission mechanism (6) actuating a piston (5) to move in the cylinder (2) reciprocately so as to produce compressed air;
**characterized in that**:
the motor (4) further includes multiple fixing portions (45) extending from a head edge (42) of a casing thereof and being configured to engage with the body (1), and a respective fixing portion (45) has a hook (451) extending from a distal end thereof, wherein the body (1) further includes multiple through orifices (13) corresponding to the multiple fixing portions (45), and a receiving groove (14) surrounding adjacent to the first positioning orifice (11); the multiple fixing portions (45) extending through the multiple through orifices (13) of the body (1) so that when the motor (4) rotates, the hooks (451) of the distal ends of the multiple fixing portions (45) abut against the receiving groove (14), thus fixing the motor (4) on the body (1) securely without using any screws.

2. The air compressor (10) as claimed in claim 1, **characterized in that** the motor (4) further includes two dissipation holes (43) symmetrically formed on two sides of the casing thereof and configured to circulate airs and to dissipate heat from the motor (4).

3. The air compressor (10) as claimed in claim 2, **characterized in that** the air compressor (10) is received in an accommodation box (7), the accommodation box (7) includes multiple columns (71) extending from inner walls of an upper housing and a lower housing of the accommodation box (7) and corresponding to the two dissipation holes (43), such that when the air compressor (10) is received in the accommodation box (7), the multiple columns (71) of the accommodation box (7) are engaged in the two dissipation holes (43) so that the motor (4) does not remove from the body (1) when the air compressor (10) is hit to turn over.

## Patentansprüche

1. Luftkompressor (10), umfassend:
einen Körper (1) einschließlich mehrerer Positionieröffnungen, die eine erste Positionieröffnung (11) und eine zweite Positionieröffnung (12) sind;
einen Zylinder (2), der mit dem Körper (1) verbunden ist und mit einem Luftspeicherbehälter (3) in Verbindung steht;
einen Motor (4), der an dem Körper (1) und einem kleinen Zahnrad (61) befestigt ist, das in der ersten Positionieröffnung (11) aufgenommen ist, und ein Verbindungssitz (41) des Motors (4) ist in der ersten Positionieröffnung (11) untergebracht;
einen Übertragungsmechanismus (6), der den Kolben (5) betätigt, um sich in dem Zylinder (2) hin und her zu bewegen, um Druckluft zu erzeugen;
**dadurch gekennzeichnet, dass**:
der Motor (4) ferner mehrere Befestigungsabschnitte (45) aufweist, die sich von einer Kopfkante (42) eines Gehäuses davon erstrecken, und so konfiguriert sind, dass sie in den Körper (1) eingreifen, und ein jeweiliger Befestigungsabschnitt (45) einen Haken (451) aufweist, der sich von einem distalen Ende davon erstreckt, wobei der Körper (1) ferner mehrere Durchgangsöffnungen (13), die den mehreren Befestigungsabschnitten (45) entsprechen, und eine Aufnahmenut (14) aufweist, die die erste Positionieröffnung (11) umgibt; die mehrfachen Befestigungsabschnitte (45) sich durch die mehreren Durchgangsöffnungen (13) des Körpers (1) erstrecken, so dass, wenn sich der Motor (4) dreht, die Haken (451) der distalen Enden der mehreren Befestigungsabschnitte (45) an der Aufnahmenut (14) anliegen, wodurch der Motor (4) ohne Verwendung irgendwelcher Schrauben sicher am Körper (1) befestigt wird.

2. Luftkompressor (10) gemäß Anspruch 1, **dadurch gekennzeichnet, dass** der Motor (4) ferner zwei Ableitungslöcher (43) aufweist, die symmetrisch auf zwei Seiten seines Gehäuses ausgebildet und so konfiguriert sind, dass sie Luft zirkulieren und Wärme vom Motor (4) ableiten.

3. Luftkompressor (10) gemäß Anspruch 2, **dadurch gekennzeichnet, dass** der Luftkompressor (10) in einem Aufnahmekasten (7) aufgenommen ist, wobei der Aufnahmekasten (7) mehrere Säulen (71) aufweist, die sich von Innenwänden eines oberen Gehäuses und eines unteren Gehäuses des Aufnahmekastens (7) erstrecken und den beiden Ableitungslöchern (43) entsprechen, so dass, wenn der Luftkompressor (10) in dem Aufnahmekasten (7) aufgenommen ist, die mehreren Säulen (71) des Aufnahmekastens (7) in die zwei Ableitungslöcher (43) eingreifen, so dass der Motor (4) sich nicht von dem Körper (1) entfernt, wenn der Luftkompressor (10) gestoßen oder umgedreht wird.

## Revendications

1. Un compresseur d'air (10) comprenant :
un corps (1) incluant plusieurs orifices de positionnement qui sont un premier orifice de positionnement (11) et un deuxième orifice de positionnement (12) ;
un cylindre (2) relié au corps (1) et communiquant avec un réservoir de stockage d'air (3) ;
un moteur (4) fixé sur le corps (1) et un petit engrenage (61) qui est reçu dans le premier orifice de positionnement (11), et un siège de connexion (41) du moteur (4) qui est logé dans le premier orifice de positionnement (11) ;
un mécanisme de transmission (6) actionnant un piston (5) pour un déplacement dans le cylindre (2) en va-et-vient de manière à produire de l'air comprimé ;
**caractérisé en ce que** :
le moteur (4) comprend en outre une pluralité de parties de fixation (45) s'étendant à partir d'un bord avant (42) d'un boîtier de celui-ci et étant configurées pour venir en engagement avec le corps (1), et une partie de fixation respective (45) présente un crochet (451) s'étendant à partir d'une extrémité distale de celle-ci, le corps (1) comprenant en outre une pluralité d'orifices traversants (13) correspondant aux multiples parties de fixation (45), et une rainure de réception (14) entourant le premier orifice de positionnement (11) de façon adjacente à celui-ci ; la pluralité de parties de fixation (45) s'étendent à travers la pluralité d'orifices traversants (13) du corps (1) de sorte que lorsque le moteur (4) tourne, les crochets (451) des extrémités distales de la pluralité de parties de fixation (45) viennent en butée contre la rainure de réception (14), fixant ainsi le moteur (4) sur le corps (1) de manière sûre sans utiliser de vis.

2. Le compresseur d'air (10) selon la revendication 1, **caractérisé en ce que** le moteur (4) comprend en outre deux trous de dissipation (43) formés symétriquement sur deux côtés de son carter et configurés pour faire circuler l'air et pour dissiper la chaleur provenant du moteur (4).

3. Le compresseur d'air (10) selon la revendication 2, **caractérisé en ce que** le compresseur d'air (10) est reçu dans une enceinte de logement (7), l'enceinte de logement (7) comprend une pluralité de colonnes (71) s'étendant à partir de parois intérieures d'un boîtier supérieur et d'un boîtier inférieur de l'enceinte de logement (7) et correspondant aux deux trous de dissipation (43), de telle sorte que lorsque le compresseur d'air (10) est reçu dans l'enceinte de logement (7), la pluralité de colonnes (71) de l'enceinte de logement (7) sont engagées dans les deux trous de dissipation (43) de telle sorte que le moteur (4) ne se détache pas du corps (1) lorsque le compresseur d'air (10) est poussé pour se retourner.
